# EUROPEAN PATENT APPLICATION

(11) **EP 4 832 202 A1**
(43) Date of publication of application: **28.10.2026**
(21) Application number: 24907258.8
(22) Date of filing: 10.12.2024
(51) Int. Cl.: H01M 50/256, H01M 50/209, H01M 50/213, H01M 50/227, H01M 50/249

(54) **BATTERY PACK**

(30) Priority: 21.12.2023 JP 2023216279
(71) Applicant: Panasonic Intellectual Property Management Co., Ltd., Kadoma-shi, Osaka 571-0057 (JP)
(72) Inventor: UMABA, Motomitsu, Kadoma-shi, Osaka 571-0057 (JP)
(74) Representative: Eisenführ Speiser
(86) International application number: PCT/JP2024/043702
(87) International publication number: WO 2025/134873

(57) **Abstract**

A battery pack includes an assembled battery including a plurality of battery cells, and a resin-made exterior case having a rectangular parallelepiped shape that houses the assembled battery, wherein the exterior case includes pin insertion holes at four corner portions of a main surface, a side surface, and an end surface, and resin blocks in which the pin insertion holes are formed on an inner side are integrally molded with the exterior case. The plurality of pin insertion holes include a first pin insertion hole, a second pin insertion hole, and a third pin insertion hole, and in each pin insertion hole an insert collar is fixed to an opening portion. In a composite corner portion, a third resin block is molded at a corner portion of the end surface, and a first resin block and a second resin block are integrally connected to the third resin block, and at a boundary portion among the main surface, the side surface, and the end surface, a stepped surface is provided along an outer peripheral surface of the third resin block to form a stepped recess in the composite corner portion.

## Description

### TECHNICAL FIELD

The present invention relates to a battery pack incorporating a large number of battery cells.

### BACKGROUND ART

Battery packs incorporating a large number of chargeable and dischargeable battery cells have been developed. Such a battery pack is used as a power source for an electric vehicle, or is used as a power source for an electric heavy machine, a forklift, or the like. In particular, in recent years, an increase in capacity of a battery pack has been demanded, and a battery pack incorporating more battery cells has been adopted. As described above, the battery pack incorporating a large number of battery cells has a considerably heavy weight of 10 kg to several tens of kg. Therefore, carrying or installing of the battery pack can be efficiently performed by lifting the battery pack using a lifting device such as a crane or a lift.

As described above, as a method of lifting a heavy battery pack, detachable lift pins are connected to the exterior case of the battery pack, and these lift pins are pulled up by a lifting machine such as a crane or a lift, whereby the battery pack can be lifted conveniently. In order to lift the battery pack by the lifting machine via the lift pins in this manner, in a plurality of places of the exterior case of the battery pack, for example, in the exterior case having a rectangular parallelepiped shape, the lift pins are connected to the four corners of the upper surface of the exterior case, whereby even a battery pack having a large weight can be stably lifted in a well-balanced manner.

As such a lift pin, a lift pin having a locking part that can be taken in and out of a tip of a cylindrical pin main body, for example, a ball lock pin or the like is generally used. In the battery pack, pin bodies of lift pins are respectively inserted into pin insertion holes provided at four corners of an upper surface of an exterior case, locking parts are locked inside the pin insertion holes, and these lift pins are simultaneously pulled up in this state, so that the battery pack can be lifted up.

However, the orientation in which the battery pack is installed varies depending on the use state and the use condition. For example, in a battery pack in which the outer shape of the exterior case is a rectangular parallelepiped box shape, it is not determined which one of three surfaces adjacent to each other in a vertical posture is installed so as to face upward. For this reason, in the battery pack having a rectangular parallelepiped shape, it is necessary to provide pin insertion holes for connecting lift pins at four corners with a surface that becomes an upper surface in a use state as a hanging surface, and when the hanging surface varies depending on products, it is necessary to design each product.

In addition, the posture of the battery pack when installed in the main body device is not necessarily an optimum posture even at the time of transportation, and depending on the product, the battery pack may be in a horizontal posture in consideration of the balance with the position of the output terminal while being efficiently loaded and transported by being in a vertical standing posture at the time of transportation. For this reason, there has been a demand for a structure in which lift pins can be connected and lifted conveniently even when the hanging surface is different between the time of transportation and the time of installation.

### Citation List

### Patent Literatures

PTL 1: Unexamined Japanese Patent Publication No. 2017-162703
PTL 2: Unexamined Japanese Patent Publication No. 2016-24856

### SUMMARY OF THE INVENTION

The present invention has been developed for solving the aforementioned conventional problems, and an object thereof is to provide a battery pack that can be lifted with respect to normal directions of three surfaces orthogonal to each other of a box-shaped exterior case while connecting lift pins to four corners of an upper surface of the exterior case when the battery pack is lifted using the lift pins.

A battery pack according to an aspect of the present invention includes: an assembled battery including a plurality of battery cells; and an exterior case made of a resin housing the assembled battery. The exterior case has a box shape with a rectangular parallelepiped outer profile, and includes a pair of main surfaces disposed to face each other, a pair of side surfaces disposed to face each other and connecting side edges of the pair of main surfaces, and a pair of end surfaces disposed to face each other and connecting end edges of the pair of main surfaces and the pair of side surfaces. The exterior case includes a plurality of pin insertion holes to which lift pins for lifting the battery pack are connectable, each of the plurality of pin insertion holes being positioned at a respective one of four corners of each of the main surfaces, four corners of each of the side surfaces, and four corners of each of the end surfaces and being formed as a non-through hole in a corresponding one of a plurality of resin blocks integrally molded with the exterior case. The plurality of pin insertion holes include a first pin insertion hole provided at each of four corners of each of the main surfaces, a second pin insertion hole provided at each of four corners of each of the side surfaces, and a third pin insertion hole provided at each of four corners of each of the end surfaces. In each of the plurality of pin insertion holes, an insert collar for locking the lift pin is inserted into and fixed in an opening of the pin insertion hole. The plurality of resin blocks include a first resin block in which the first pin insertion hole is formed, a second resin block in which the second pin insertion hole is formed, and a third resin block in which the third pin insertion hole is formed. A corner portion formed by a corresponding main surface of the main surfaces, a corresponding side surface of the side surfaces, and a corresponding end surface of the end surfaces, each of which has the plurality of pin insertion holes at four corners, is defined as a composite corner portion having the first pin insertion hole, the second pin insertion hole, and the third pin insertion hole. In the composite corner portion, the third resin block is molded at a corner of the corresponding end surface, and the third pin insertion hole is open on the corresponding end surface, the first resin block is integrally connected adjacent to the third resin block, and the first pin insertion hole is open on the corresponding main surface, the second resin block is integrally connected adjacent to the third resin block, and the second pin insertion hole is open on the corresponding side surface. A stepped surface, lower than the corresponding main surface and the corresponding side surface, is formed along an outer peripheral surface of the third resin block at a boundary portion among the corresponding main surface, the corresponding side surface, and the corresponding end surface, to form a stepped recess at the composite corner portion.

The battery pack of the present invention has an advantage that when the battery pack is lifted using the lift pins, the battery pack can be lifted with respect to normal directions of three surfaces orthogonal to each other of the box-shaped exterior case while the lift pins are connected to four corners of the upper surface of the exterior case.

### BRIEF DESCRIPTION OF THE DRAWINGS

Fig. 1 is a perspective view of a battery pack according to an exemplary embodiment of the present invention.
Fig. 2 is an exploded perspective view of the battery pack illustrated in Fig. 1.
Fig. 3 is a rear perspective view of the battery pack illustrated in Fig. 2 as viewed from below.
Fig. 4 is an exploded perspective view of an assembled battery of the battery pack illustrated in Fig. 2.
Fig. 5 is an enlarged perspective view illustrating a composite corner portion of the battery pack illustrated in Fig. 1.
Fig. 6 is a horizontal cross-sectional view of the composite corner portion illustrated in Fig. 5.
Fig. 7 is an exploded cross-sectional view corresponding to a cross section taken along line VII-VII of the composite corner portion illustrated in Fig. 6.
Fig. 8 is a cross-sectional view taken along line VIII-VIII of the composite corner portion illustrated in Fig. 6, and is a view illustrating an insertion state of a lift pin.
Fig. 9 is a view illustrating a locked state of a lift pin in the composite corner portion illustrated in Fig. 8.
Fig. 10 is an enlarged perspective view of the lid case illustrated in Fig. 3 as viewed from the inside.
Fig. 11 is a perspective view illustrating a state in which the battery pack illustrated in Fig. 1 is lifted up using a lift pin.
Fig. 12 is a perspective view illustrating a state in which the battery pack illustrated in Fig. 1 is lifted in different postures.
Fig. 13 is a perspective view illustrating a state in which the battery pack illustrated in Fig. 1 is lifted in different postures.
Fig. 14 is a perspective view of a battery pack according to a second exemplary embodiment of the present invention.
Fig. 15 is a rear perspective view of the battery pack illustrated in Fig. 14 as viewed from below.
Fig. 16 is a perspective view illustrating an example of a battery pack according to a comparative example.
Fig. 17 is an exploded perspective view of the battery pack illustrated in Fig. 16.

### DESCRIPTION OF EMBODIMENTS

First, one aspect of the present invention will be described. When a battery pack in which an assembled battery including a large number of battery cells is housed in a box-shaped exterior case is lifted using a lifting machine such as a crane or a lift by connecting lift pins to four corners of the upper surface, it is necessary to provide pin insertion holes for inserting the lift pins in the four corners of the upper surface serving as the hanging surface. In particular, in order to lift the battery pack in different postures, it is necessary to provide pin insertion holes at four corners of a surface that can be a hanging surface. However, in a structure in which the exterior case is made of plastic, there is a problem that it is difficult to directly provide the pin insertion holes as in a metal case due to structural and strength problems. Here, in a case where pin insertion holes are provided at four corners of a surface serving as a hanging surface of an exterior case having a box outer shape, in order to cause a plurality of surfaces to serve as the hanging surface, it is necessary to provide a plurality of pin insertion holes in an intersecting direction at one corner, and thus there is a possibility that the strength of the corner is reduced. In the exterior case made of resin, when the strength of the corner decreases, there is a problem that the safety at the time of lifting through the lift pin decreases. In addition, in order to make the exterior case have a waterproof structure, it is not preferable to open a large number of through holes in the exterior case.

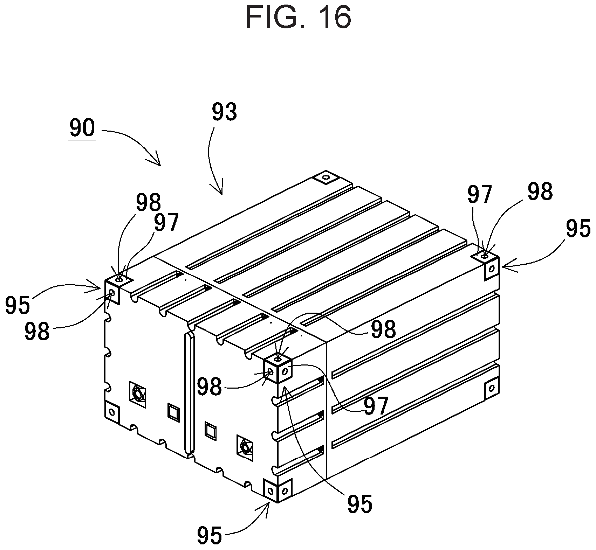

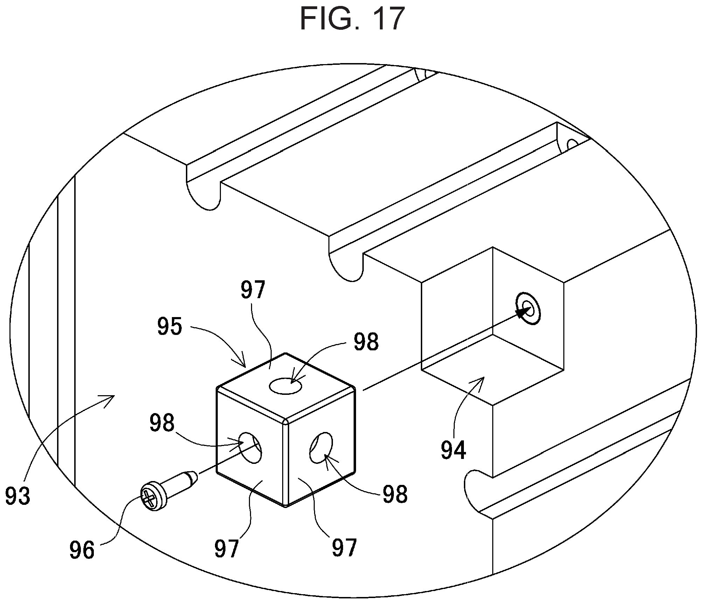

In order to solve the above problems, as illustrated in Figs. 16 and 17, battery pack 90 of a comparative example capable of lifting the battery pack in different directions was prototyped while the exterior case is made of resin and has a waterproof structure. In battery pack 90, a cube-shaped corner block 95 is fixed to each corner of exterior case 93 made of resin having a rectangular parallelepiped outer shape. These corner blocks 95 are fixed to coupling recess 94 of exterior case 93 via set screws 96. Each of corner blocks 95 has pin insertion hole 98 for inserting a lift pin opened in pin connecting surface 97 arranged perpendicular to each other. In battery pack 90 having this structure, by fixing corner blocks 95 to the respective corners of exterior case 93, pin insertion holes 98 opened in three directions at the respective corners can be arranged, and by connecting lift pins to pin insertion holes 98 of corner blocks 95 arranged at the four corners of the upper surface of exterior case 93, lifting can be performed while each surface of box-shaped exterior case 93 is set as the upper surface.

However, in the battery pack having this structure, it is necessary to manufacture a plurality of corner blocks separately from the exterior case, and it is necessary to fix each corner block to a corner of the exterior case. Therefore, there is a problem that the component cost increases and the manufacturing cost increases because the manufacturing process also increases.

In order to solve the above problems, the present inventor has further repeated trial production, and has found a structure in which the exterior case is made of resin, and a plurality of pin connection holes are provided in the intersecting direction at one corner, but the strength of the corner of the exterior case is prevented from decreasing, and the exterior case can be safely lifted via the lift pins. The present invention provides a technique capable of preventing a decrease in strength of a corner while reducing manufacturing cost by making an exterior case made of resin, and capable of lifting up a battery pack with respect to normal directions of three surfaces orthogonal to each other while connecting lift pins to four corners of an upper surface of the exterior case when the battery pack is lifted up using the lift pins.

A battery pack according to an exemplary embodiment of the present invention includes: an assembled battery including a plurality of battery cells; and an exterior case made of a resin housing the assembled battery. The exterior case has a box shape with a rectangular parallelepiped outer profile, and includes a pair of main surfaces disposed to face each other, a pair of side surfaces disposed to face each other and connecting side edges of the pair of main surfaces, and a pair of end surfaces disposed to face each other and connecting end edges of the pair of main surfaces and the pair of side surfaces. The exterior case includes a plurality of pin insertion holes to which lift pins for lifting the battery pack are connectable, each of the plurality of pin insertion holes being positioned at a respective one of four corners of each of the main surfaces, four corners of each of the side surfaces, and four corners of each of the end surfaces and being formed as a non-through hole in a corresponding one of a plurality of resin blocks integrally molded with the exterior case. The plurality of pin insertion holes include a first pin insertion hole provided at each of four corners of each of the main surfaces, a second pin insertion hole provided at each of four corners of each of the side surfaces, and a third pin insertion hole provided at each of four corners of each of the end surfaces. In each of the plurality of pin insertion holes, an insert collar for locking the lift pin is inserted into and fixed in an opening of the pin insertion hole. The plurality of resin blocks include a first resin block in which the first pin insertion hole is formed, a second resin block in which the second pin insertion hole is formed, and a third resin block in which the third pin insertion hole is formed. A corner portion formed by a corresponding main surface of the main surfaces, a corresponding side surface of the side surfaces, and a corresponding end surface of the end surfaces, each of which has the plurality of pin insertion holes at four corners, is defined as a composite corner portion having the first pin insertion hole, the second pin insertion hole, and the third pin insertion hole. In the composite corner portion, the third resin block is molded at a corner of the corresponding end surface, and the third pin insertion hole is open on the corresponding end surface, the first resin block is integrally connected adjacent to the third resin block, and the first pin insertion hole is open on the corresponding main surface, the second resin block is integrally connected adjacent to the third resin block, and the second pin insertion hole is open on the corresponding side surface. A stepped surface, lower than the corresponding main surface and the corresponding side surface, is formed along an outer peripheral surface of the third resin block at a boundary portion among the corresponding main surface, the corresponding side surface, and the corresponding end surface, to form a stepped recess at the composite corner portion.

The above configuration has an advantage that the battery pack can be lifted with respect to normal directions of three surfaces orthogonal to each other of the box-shaped exterior case while the lift pins are connected to four corners of the upper surface of the exterior case. This is because the above battery pack is provided with pin insertion holes for connecting the lift pins at the four corners of the main surface, the side surface, and the end surface of the exterior case. Since the battery pack includes the pin insertion holes at the four corners of the main surface, the side surface, and the end surface of the exterior case, even in an attitude in which any surface in which the pin insertion holes are arranged at the four corners is the upper surface, it is possible to realize the feature that the lift pins can be connected to the pin insertion holes arranged at the four corners of the upper surface and lifted, and the box-shaped exterior case can be lifted with respect to the normal directions of the three surfaces orthogonal to each other. In the battery pack described above, for example, pin insertion holes are provided at four corners of three surfaces orthogonal to each other among the six surfaces of the rectangular parallelepiped exterior case, whereby the lift pins can be connected to the pin insertion holes arranged at the four corners of the upper surface and lifted even in a posture in which any of the three surfaces in which the pin insertion holes are arranged at the four corners is the upper surface.

In addition, in the exterior case described above, a plurality of resin blocks each having a pin insertion hole formed inside in a non-penetrating state are integrally molded, corners formed by main surfaces, side surfaces, and end surfaces each having a pin insertion hole provided at four corners are formed as composite corner portions each having first to third pin insertion holes, and in the composite corner portions, the first to third resin blocks each having the first to third pin insertion holes are integrally molded. Therefore, by integrally molding the first to third resin blocks each having the first to third pin insertion holes while forming the composite corner portion having the first to third pin insertion holes as a waterproof structure, rigidity of the composite corner portion can be increased, and the composite corner portion can be stably lifted with a lift pin. Further, in the composite corner portion, a stepped surface formed one step lower than the main surface and the side surface is provided along the outer peripheral surface of the third resin block to form a stepped recess, so that there is an advantage that the thickness of the resin at the corner is suppressed, and sink marks generated during resin molding can be prevented to obtain a beautiful appearance.

In the battery pack according to another exemplary embodiment of the present invention, the exterior case may include the plurality of pin insertion holes at each of the four corners of each of six surfaces constituting the rectangular parallelepiped, and each corner portion of the exterior case may be the composite corner portion.

According to the above configuration, the pin insertion holes are provided at the four corners of the six surfaces of the exterior case, and the eight corners are formed as the composite corner portions. Therefore, even in a state where the battery pack is disposed in a posture in which any surface of the exterior case faces upward, the battery pack can be lifted by connecting the lift pins to the pin insertion holes disposed at the four corners of the upper surface.

In a battery pack according to another exemplary embodiment of the present invention, each of the plurality of pin insertion holes includes a pre-formed hole provided in a corresponding one of the plurality of resin blocks, the insert collar being fixed in the opening of the pre-formed hole, the insert collar has a cylindrical shape with an inner diameter that allows passage of the lift pin in a non-locked state but does not allow passage of the lift pin in a locked state, and the pre-formed hole has a cylindrical shape with an inner diameter and a depth that allow the lift pin in the locked state to be taken into and out of the pre-formed hole.

According to the above configuration, there is an advantage that it is possible to reliably control the taking in and out and the locking of the lift pins while forming the pin insertion hole with a simple structure.

In the battery pack according to another exemplary embodiment of the present invention, the insert collar includes a cylindrical tube having an outer peripheral surface with irregularities, and the cylindrical tube is press-fitted and fixed to the pre-formed hole.

According to the above configuration, by press-fitting the tube provided with irregularities on the outer peripheral surface into the opening of the pre-formed hole, the insert collar can be crimped and reliably fixed to the inner surface of the pre-formed hole.

In the battery pack according to another exemplary embodiment of the present invention, the first resin block is integrally molded with a main surface plate defining the corresponding main surface, an end surface plate defining the corresponding end surface, and the third resin block, and the second resin block is integrally molded with a side surface plate defining the corresponding side surface, the end surface plate defining the corresponding end surface, and the third resin block.

According to the above configuration, the first resin block is integrally molded with the main surface plate, the end surface plate, and the third resin block, and the second resin block is integrally molded with the side surface plate, the end surface plate, and the third resin block. Therefore, the thicknesses of the first resin block and the second resin block are suppressed from increasing, and the strength can be increased while the occurrence of sink marks during resin molding is prevented.

In the battery pack according to another exemplary embodiment of the present invention, each of the first resin block and the second resin block includes a tip portion around the opening, the tip portion protruding from the stepped surface as an arc-shaped exposed portion.

According to the above configuration, the tip on the opening side of the first resin block integrally molded on the main surface plate is made to protrude from the stepped surface as the arc-shaped exposed portion, and the tip on the opening side of the second resin block integrally molded on the side surface plate is made to protrude from the stepped surface as the arc-shaped exposed portion. Therefore, it is possible to effectively prevent the first resin block and the second resin block from increasing in thickness at the interference portion with the stepped surface, to prevent sink marks at the time of resin molding, and to improve the appearance.

The present invention will now be described in detail with reference to drawings. Note that, in the following description, terms (for example, "top", "bottom", and other terms including those terms) indicating specific directions or positions are used as necessary; however, the use of those terms is for facilitating the understanding of the invention with reference to the drawings, and the technical scope of the present invention is not limited by the meanings of the terms. Portions denoted by the same reference numerals in a plurality of drawings indicate the identical or equivalent portions or members.

Moreover, exemplary embodiments described below illustrate specific examples of the technical idea of the present invention, and the present invention is not limited to the exemplary embodiments below. Furthermore, unless otherwise specified, dimensions, materials, shapes, relative arrangements, and the like of the configuration components described below are not intended to limit the scope of the present invention only to them, but are intended to be illustrative. Furthermore, the contents described in one exemplary embodiment or example are also applicable to other exemplary embodiments and examples. In addition, sizes, positional relationships, and the like of the members in each drawing are sometimes exaggerated for the purpose of facilitating the understanding of the description.

### (First exemplary embodiment)

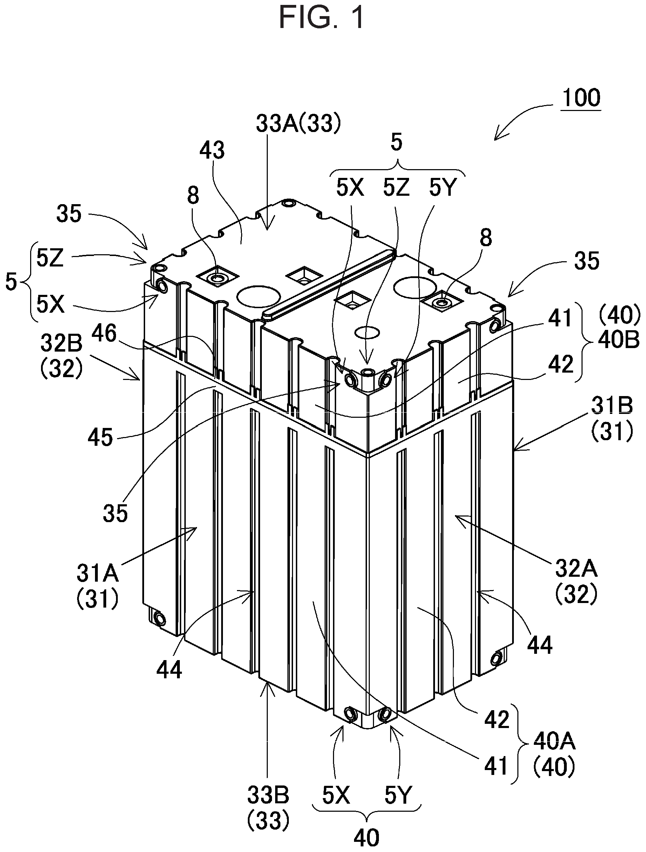

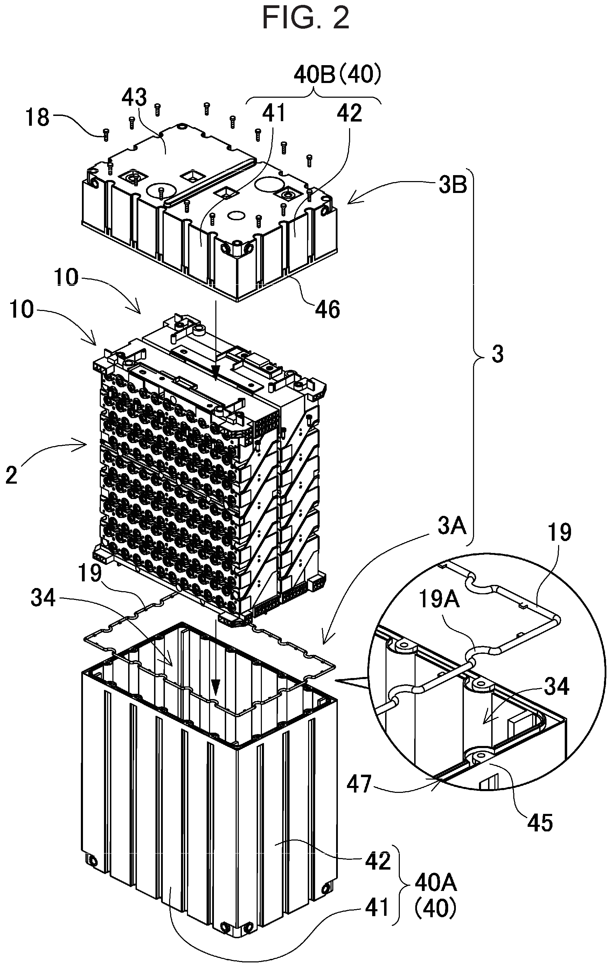

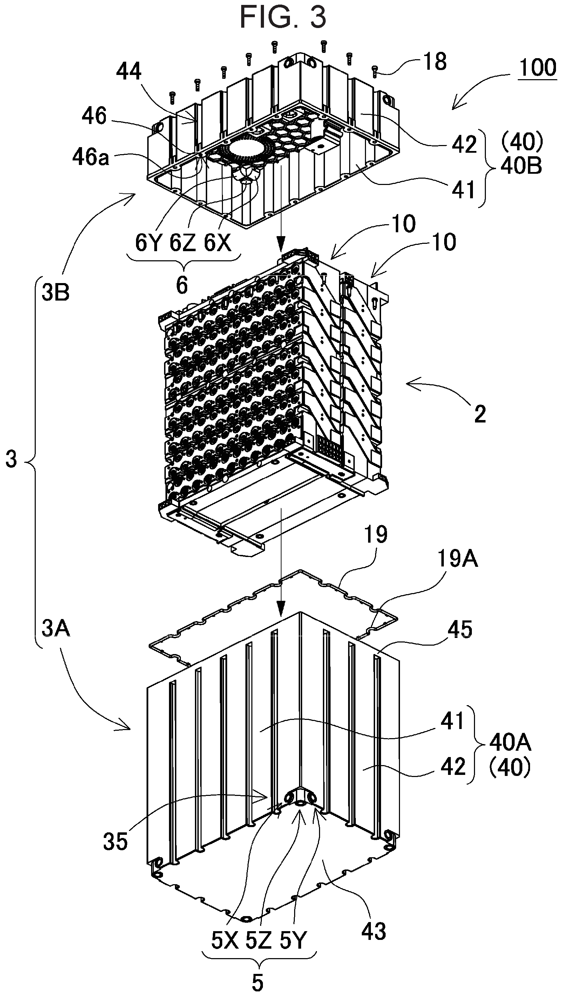

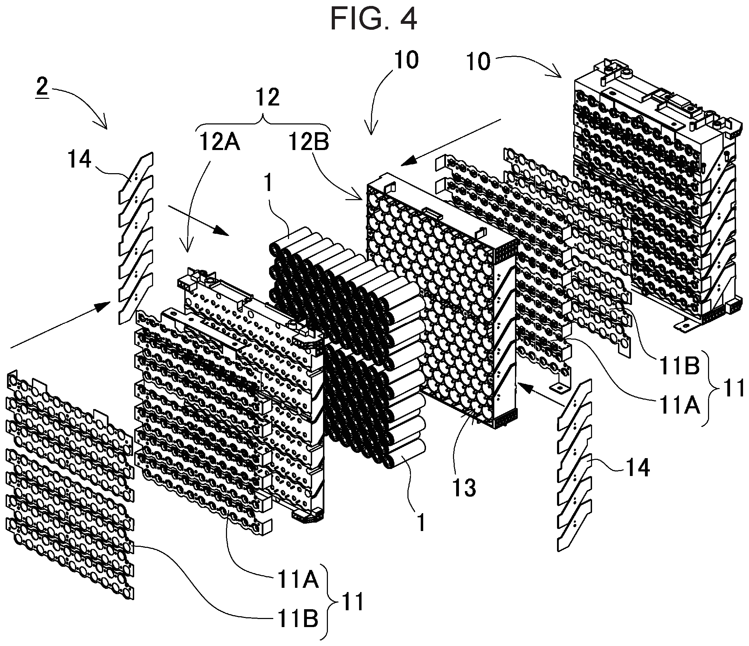

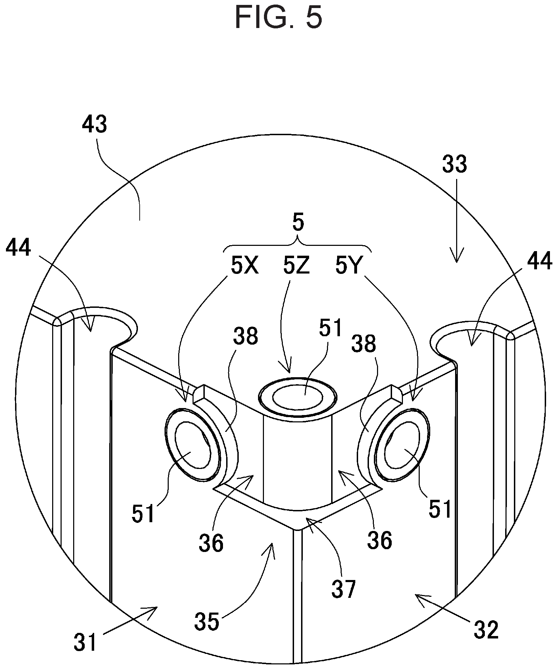

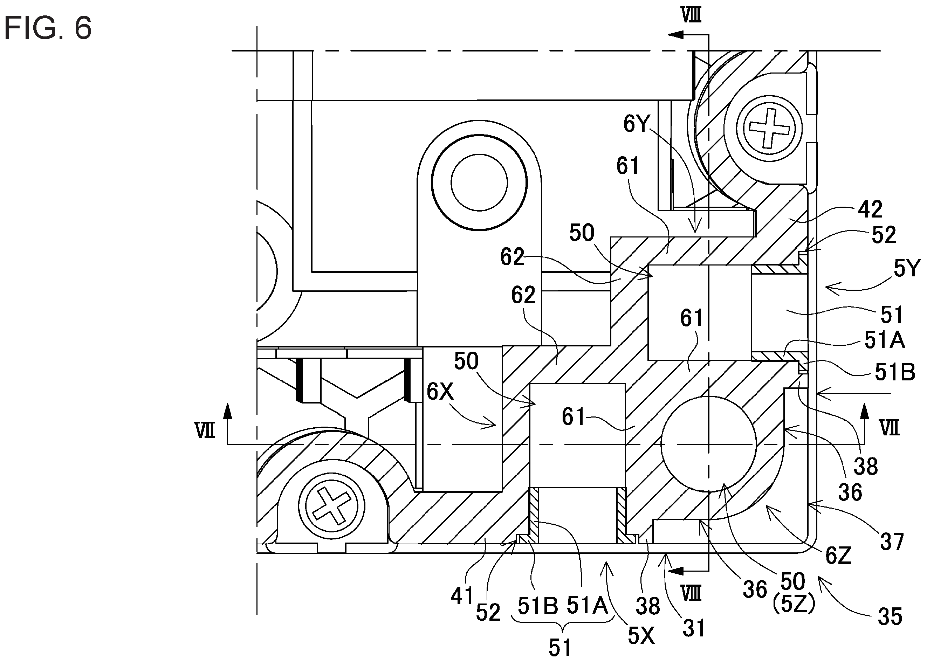

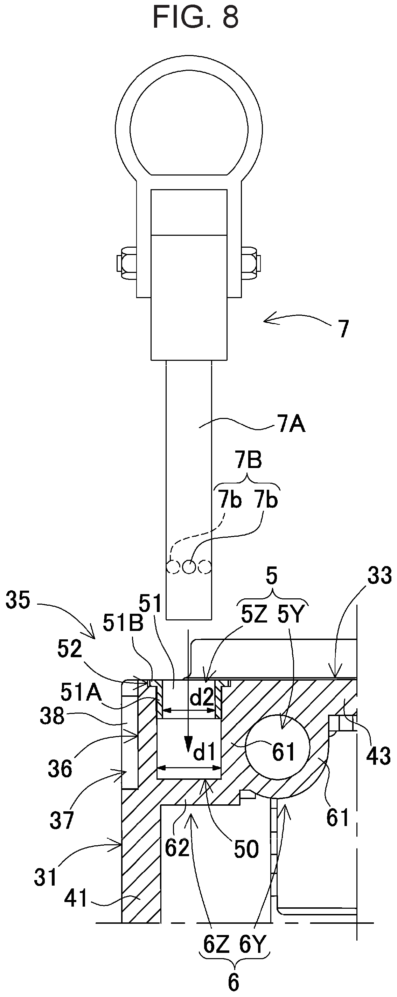

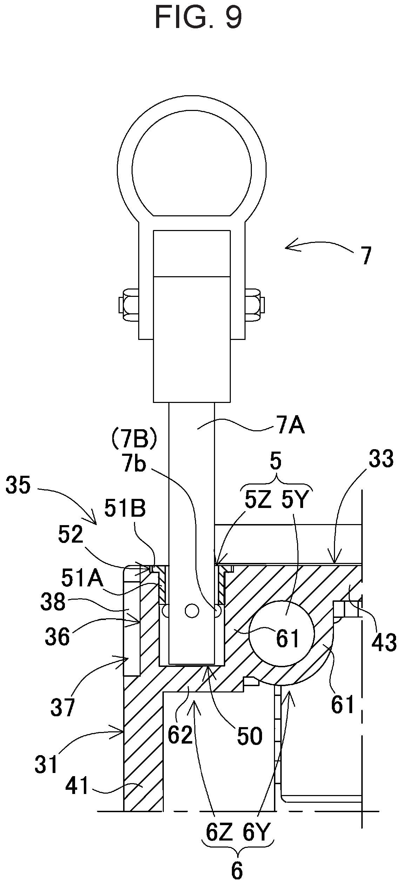

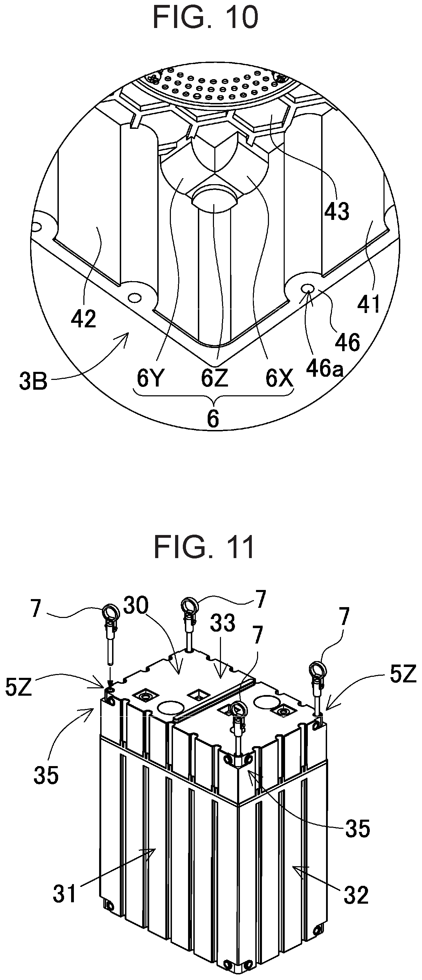

The battery pack according to an exemplary embodiment of the present invention is illustrated in Figs. 1 to 10. In these drawings, Fig. 1 is a perspective view of a battery pack, Fig. 2 is an exploded perspective view of the battery pack illustrated in Fig. 1, Fig. 3 is a rear exploded perspective view of the battery pack illustrated in Fig. 2 as viewed from below, Fig. 4 is an exploded perspective view of an assembled battery, Fig. 5 is an enlarged perspective view of a composite corner portion of an exterior case, Fig. 6 is a horizontal cross-sectional view of the composite corner portion of Fig. 5, Figs. 7 and 8 are cross-sectional views taken along lines VII-VII and VIII-VIII in Fig. 6, Fig. 9 is a cross-sectional view illustrating a locked state of a lift pin in Fig. 8, and Fig. 10 is an enlarged bottom perspective view of a lid case. The battery pack illustrated in these drawings includes assembled battery 2 including a plurality of battery cells 1 and exterior case 3 made of resin and housing assembled battery 2. In battery pack 100, the lift pins are connected to the four corners of the upper surface of exterior case 3 in which assembled battery 2 is housed, and the battery pack is lifted, so that the work efficiency at the time of transportation or installation can be improved.

### (Exterior case 3)

Exterior case 3 has a rectangular parallelepiped box outer shape. Exterior case 3 is made of a member having excellent insulation properties, for example, a resin such as polycarbonate or a PC-ABS alloy. Rectangular-parallelepiped exterior case 3 includes, as six surfaces which are outer surfaces, a pair of main surfaces 31 disposed to face each other, a pair of side surfaces 32 that are disposed to face each other and connect side edges of the pair of main surfaces 31 to each other, and a pair of end surfaces 33 arranged to face each other and connecting end edges of the pair of main surfaces 31 and the pair of side surfaces 32. Specifically, in exterior case 3, the pair of main surfaces 31 including first main surface 31A and second main surface 31B arranged in parallel to each other, the pair of side surfaces 32 including first side surface 32A and second side surface 32B arranged in parallel to each other, and the pair of end surfaces 33 including first end surface 33A and second end surface 33B arranged in parallel to each other constitute six surfaces.

Exterior case 3 illustrated in Figs. 2 and 3 is divided into two parts, that is, body case 3A and lid case 3B at an intermediate portion between main surface 31 and side surface 32. Body case 3A and lid case 3B have a container shape in which main surface plate 41 and side surface plate 42 are provided as peripheral wall 40 around end surface plate 43 forming end surface 33, and housing 34 capable of housing assembled battery 2 is formed inside. Body case 3A and lid case 3B have different heights of peripheral walls 40A, 40B connected to end surface plate 43, thereby forming body case 3A deeper than lid case 3B. Body case 3A and lid case 3B are formed in a tubular shape by connecting main surface plate 41 forming main surface 31 and side surface plate 42 forming side surface 32 at both side edges, and are formed in a deep container shape by connecting end surface plate 43 to one end surface and using the other end surface as an opening. Further, in exterior case 3 illustrated in the drawing, lid case 3B is provided with positive and negative external output terminals 8.

In exterior case 3 illustrated in Figs. 2 and 3, a plurality of rows of grooves 44 are formed on the surfaces of main surface plate 41 and side surface plate 42 which are peripheral wall 40. The plurality of grooves 44 are provided to extend in the height direction of peripheral wall 40 in a posture parallel to each other. In exterior case 3 in the drawing, groove 44 is provided over the entire peripheral wall 40, and the heat dissipation characteristic of exterior case 3 is enhanced by reducing the weight of the entire exterior case 3 and increasing the surface area. In body case 3A and lid case 3B, a plurality of rows of grooves 44 are provided from end surface plate 43 toward the opening, but flanges 45, 46 are provided along the opening edge without providing groove 44 in the opening edge portion. Body case 3A and lid case 3B are connected to each other by connecting flanges 45, 46 facing each other via set screw 18. As illustrated in Fig. 3, lid case 3B is provided with insertion hole 46a through which set screw 18 is inserted in flange 46, and body case 3A has flange 45 as a boss portion into which set screw 18 is screwed.

Further, body case 3A and lid case 3B are connected to each other with a waterproof structure via packing 19 at opposed opening edges. Packing 19 illustrated in Fig. 2 is a rubber packing having a substantially rectangular shape in plan view along the opening end surfaces of body case 3A and lid case 3B and having a predetermined thickness, and is disposed along vertical groove 47 provided in the opening end surface of body case 3A. Since body case 3A and lid case 3B are connected by set screw 18 at a position facing groove 44 provided in peripheral wall 40, packing 19 in Fig. 2 is provided with detour portion 19A detouring inward in a U-shape at a position facing groove 44, that is, at a position where set screw 18 is inserted. As a result, set screw 18 can be screwed outside packing 19, thereby preventing water from entering the screwed portion. Body case 3A and lid case 3B are connected to each other in a watertight structure with set screw 18 inserted through insertion hole 46a of flange 46 of lid case 3B screwed into flange 45 of body case 3A in a state where packing 19 is disposed in vertical groove 47 of the open end surface of body case 3A and packing 19 is sandwiched by the open end surface of lid case 3B. Short groove 44 formed in lid case 3B is also used as a tool gap for guiding a screwdriver when set screw 18 is screwed in.

As illustrated in Figs. 1 to 3, exterior case 3 having a rectangular parallelepiped shape is provided with pin insertion holes 5 for connecting lift pins at four corners of main surface 31, side surface 32, and end surface 33 so as to be capable of being lifted even in a posture in which any of main surface 31, side surface 32, and end surface 33 is an upper surface. As illustrated in Figs. 5 to 10, exterior case 3 is provided with a plurality of resin blocks 6 integrally molded at four corners of main surface 31, side surface 32, and end surface 33, and pin insertion holes 5 are formed inside these resin blocks 6.

Exterior case 3 described above is lifted by connecting lift pins to pin insertion holes 5 arranged at the four corners of hanging surface 30 with the surface arranged on the upper surface as hanging surface 30, and simultaneously pulling up the four lift pins by a lifting machine (not illustrated) such as a crane or a lift. As described above, the battery pack of the present invention can be lifted even in a posture in which any one of main surface 31, side surface 32, and end surface 33 of exterior case 3 is the upper surface, and exterior case 3 can be lifted in three directions orthogonal to each other. As described above, in the structure in which the lift pins are connected to pin insertion holes 5 arranged at the four corners of hanging surface 30 serving as the upper surface to lift, pin insertion holes 5 are provided at the four corners of all the six surfaces of the rectangular parallelepiped exterior case 3, whereby pin insertion holes 5 can be arranged at the four corners of the upper surface serving as hanging surface 30 even in a posture in which any of the six surfaces is the upper surface. Battery pack 100 illustrated as the first exemplary embodiment has a structure in which pin insertion holes 5 are provided at four corners of all six surfaces of the rectangular parallelepiped exterior case 3, that is, four corners of first main surface 31A, second main surface 31B, first side surface 32A, second side surface 32B, first end surface 33A, and the second end surface 33B, and exterior case 3 can be lifted even in an attitude in which any of the six surfaces of exterior case 3 is an upper surface. However, exterior case 3 can be lifted in three directions orthogonal to each other by arranging pin insertion holes 5 at at least four corners of three surfaces orthogonal to each other. This structure will be described later in detail.

### (Pin insertion hole 5)

As illustrated in Figs. 5 to 9, pin insertion hole 5 is provided in a vertical posture at four corners of main surface 31, side surface 32, and end surface 33 of exterior case 3, and has a structure for locking a lift pin inserted therein. In the plurality of pin insertion holes 5 illustrated in Figs. 6 to 9, insert collar 51 for locking lift pin 7 is inserted and fixed to an opening. Pin insertion hole 5 illustrated in the drawing is fixed by inserting cylindrical insert collar 51 into an opening of cylindrical pre-formed hole 50 formed in resin block 6 integrally molded with exterior case 3. As illustrated, pre-formed hole 50 into which insert collar 51 is inserted has an inner diameter (d1) and a depth (h1) with which lift pin 7 in the locking posture can be taken in and out.

### (Insert collar 51)

Insert collar 51 includes tube 51A that has a cylindrical shape and is inserted into pre-formed hole 50. Tube 51A of insert collar 51 has an inner diameter (d2) that allows passage of lift pin 7 in the non-locking posture but does not allow passage of lift pin 7 in the locking posture. Furthermore, insert collar 51 is provided by bending flange 51B at the rear end of tube 51A. Pin insertion hole 5 illustrated in the drawing is provided with fitting recess 52 that guides flange 51B of insert collar 51 at the opening edge of pre-formed hole 50. Fitting recess 52 is a circular recess along the outer shape of flange 51B and has a depth equal to the thickness of flange 51B. This structure has a feature that the rear end portion of insert collar 51 in which tube 51A is inserted into pre-formed hole 50 can be fixed at a fixed position while being positioned.

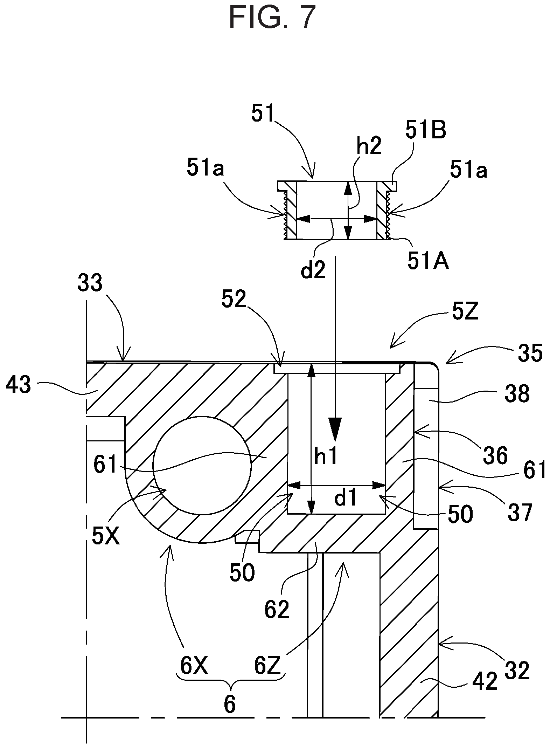

Above-described insert collar 51 is press-fitted into pre-formed hole 50 and fixed at a fixed position. As illustrated in Fig. 7, insert collar 51 press-fitted into pre-formed hole 50 is provided with an infinite number of irregularities 51a on the outer peripheral surface of tube 51A by knurling, and is crimped to the inner surface of pre-formed hole 50 in a state of being press-fitted into the opening of pre-formed hole 50, and is fixed so as not to come off even if pulled by lift pin 7. Insert collar 51 is made of metal, for example, brass. However, other metals can also be used for the insert collar.

In pin insertion hole 5 having the above structure, as illustrated in Fig. 8, when locking part 7B comes into the locking posture after lift pin 7 is inserted into pin insertion hole 5 in the non-locking posture and locking part 7B passes through insert collar 51, locking part 7B is locked to the distal end of insert collar 51 and can be lifted by lift pin 7 as illustrated in Fig. 9. Here, the locked state of lift pin 7 refers to a state in which locking part 7B protrudes from the tip of cylindrical pin main body 7A, the locked state of the case of the ball lock pin refers to a state in which the plurality of balls 7b protrude from the outer peripheral surface of pin main body 7A (see Fig. 9), the non-locked state of lift pin 7 refers to a state in which locking part 7B is housed inside cylindrical pin main body 7A, and the non-locked state of the ball lock pin refers to a state in which the plurality of balls 7b are housed inside the outer peripheral surface of pin main body 7A (see Fig. 8). Therefore, pin insertion hole 5 has such a depth that a space is provided in which the tip of lift pin 7 having passed through insert collar 51 can protrude locking part 7B. For example, in a ball lock pin including pin main body 7A of M8 size as lift pin 7 and protruding a plurality of balls 7b as locking part 7B, the inner diameter (d1) of pre-formed hole 50 can be set to about 10 mm, the depth (h1) can be set to 14 mm to 16 mm, the inner diameter (d2) of insert collar 51 can be set to about 8 mm, the total length (h2) can be set to about 5 mm, and the wall thickness of tube 51A can be set to about 1 mm.

As illustrated in Figs. 5 to 9, pin insertion holes 5 formed at the four corners of each surface include first pin insertion holes 5X provided at the four corners of main surface 31, second pin insertion holes 5Y provided at the four corners of side surface 32, and third pin insertion holes 5Z provided at the four corners of end surface 33. In the corner formed by main surface 31, side surface 32, and end surface 33 in which pin insertion holes 5 are provided at the four corners, first pin insertion hole 5X, second pin insertion hole 5Y, and third pin insertion hole 5Z are arranged in a posture orthogonal to each other, and composite corner portion 35 including first pin insertion hole 5X, second pin insertion hole 5Y, and third pin insertion hole 5Z is formed.

### (Resin block 6)

As illustrated in Figs. 6 to 10, resin block 6 is integrally molded with exterior case 3 at four corners of main surface 31, side surface 32, and end surface 33, and reinforces the corner of exterior case 3 where pin insertion hole 5 is formed. The plurality of resin blocks 6 include first resin block 6X in which first pin insertion hole 5X is formed, second resin block 6Y in which second pin insertion hole 5Y is formed, and third resin block 6Z in which third pin insertion hole 5Z is formed. Particularly, in composite corner portion 35 in which first pin insertion hole 5X, second pin insertion hole 5Y, and third pin insertion hole 5Z are arranged, the corner is reinforced by integrally molding first resin block 6X, second resin block 6Y, and third resin block 6Z with exterior case 3 while integrally connecting first resin block 6X, second resin block 6Y, and third resin block 6Z. Here, the strength of each of resin blocks 6 can be increased by increasing the thickness, but sink marks are likely to occur during resin molding, and the appearance is deteriorated. On the other hand, when the thickness is reduced, sufficient strength cannot be obtained. Therefore, in consideration of these, each of resin blocks 6 is molded so as to have an optimum wall thickness. In particular, resin block 6 is molded by being partially integrally connected to exterior case 3 and resin block 6 which are adjacent thereto, so that the strength can be enhanced while the thickness is reduced.

In exterior case 3 illustrated in Figs. 5 and 6, in composite corner portion 35, third resin block 6Z is molded at an edge corner of end surface 33, and third pin insertion hole 5Z is opened on end surface 33, first resin block 6X is adjacently and integrally connected to third resin block 6Z, and first pin insertion hole 5X is opened on the main surface, second resin block 6Y is adjacently and integrally connected to third resin block 6Z, and second pin insertion hole 5Y is opened on side surface 32. Further, in exterior case 3, stepped surface 36 formed to be lower than main surface 31 and side surface 32 is provided along an outer peripheral surface of third resin block 6Z at a boundary portion between main surface 31 as well as side surface 32 and end surface 33, to form stepped recess 37 at composite corner portion 35.

As illustrated in Figs. 5 to 10, third resin block 6Z formed at the edge corner of end surface 33 is formed along the extending direction of the boundary edge between main surface 31 and side surface 32. In third resin block 6Z: the opening of pre-formed hole 50 is integrally molded with end surface plate 43 forming end surface 33, while a part of cylindrical outer periphery 61 is integrally connected to adjacent first resin block 6X; another part of cylindrical outer periphery 61 is integrally connected to adjacent second resin block 6Y; and further, a part of bottom 62 is integrally connected to main surface 31 and side surface 32. Further, in third resin block 6Z, one stepped surface 36 provided along the outer peripheral surface is disposed one step lower than main surface 31, and the other stepped surface 36 is disposed one step lower than side surface 32. With the above structure, an increase in the thickness of third resin block 6Z is suppressed to increase the strength while preventing sink marks.

In addition, in first resin block 6X molded adjacent to third resin block 6Z: the opening of pre-formed hole 50 is integrally molded with main surface plate 41 forming main surface 31, while a part of cylindrical outer periphery 61 is integrally connected to end surface plate 43 forming end surface 33; another part of cylindrical outer periphery 61 is integrally connected to adjacent third resin block 6Z; and further, a part of bottom 62 is integrally connected to bottom 62 of second resin block 6Y. With this structure, an increase in the thickness of first resin block 6X is suppressed, and strength is increased while occurrence of sink marks is prevented. Further, in first resin block 6X, a part of the tip on the opening side protrudes from stepped surface 36 as arc-shaped exposed portion 38. As a result, it is possible to effectively prevent the thickness from increasing at the interference portion between first resin block 6X and stepped surface 36 of third resin block 6Z, and to prevent sink marks during resin molding.

Further, in second resin block 6Y molded adjacent to third resin block 6Z: the opening of pre-formed hole 50 is integrally molded with side surface plate 42 forming side surface 32, while a part of cylindrical outer periphery 61 is integrally connected to end surface plate 43 forming end surface 33; another part of cylindrical outer periphery 61 is integrally connected to adjacent third resin block 6Z; and further, a part of bottom 62 is integrally connected to bottom 62 of first resin block 6X. With this structure, an increase in the thickness of second resin block 6Y is suppressed, and strength is increased while occurrence of sink marks is prevented. Further, second resin block 6Y has a part of the tip on the opening side protruding from stepped surface 36 as arc-shaped exposed portion 38. As a result, it is possible to effectively prevent the thickness from increasing at the interference portion between second resin block 6Y and stepped surface 36 of third resin block 6Z, and to prevent sink marks during resin molding.

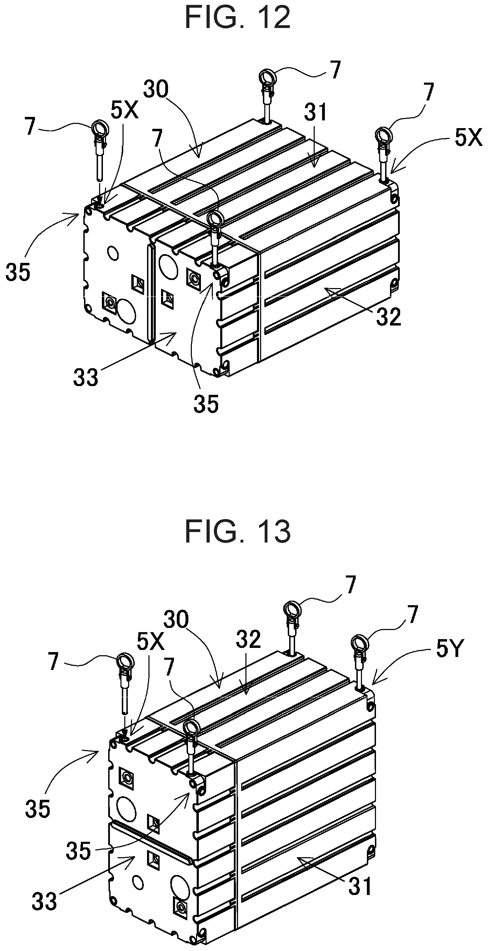

As illustrated in Figs. 11 to 13, battery pack 100 described above can be lifted up by inserting lift pins 7 into pin insertion holes 5 provided at the four corners in a posture in which the surfaces provided with pin insertion holes 5 at the four corners are the upper surfaces and bringing the battery pack into a locked state (see Figs. 8 and 9), and simultaneously pulling up lift pins 7 at the four corners with a lifting device (not illustrated) in this state. Fig. 11 illustrates a state in which lift pins 7 are inserted into pin insertion holes 5 provided at the four corners with end surface 33 of exterior case 3 as the upper surface and end surface 33 as hanging surface 30 and are lifted. Fig. 12 illustrates a state in which lift pins 7 are inserted into pin insertion holes 5 provided at the four corners with main surface 31 of exterior case 3 as the upper surface and main surface 31 as hanging surface 30 and are lifted. Further, Fig. 13 illustrates a state in which lift pins 7 are inserted into pin insertion holes 5 provided at the four corners with side surface 32 of exterior case 3 as the upper surface and side surface 32 as hanging surface 30 and are lifted. In battery pack 100 illustrated in these drawings, pin insertion holes 5 can be arranged at the four corners of the upper surface in a posture in which any surface is the upper surface, and lift pins 7 can be inserted into pin insertion holes 5 provided at the four corners to lift battery pack 100.

### (Assembled battery 2)

As illustrated in Figs. 2 to 4, in battery pack 100, a plurality of battery cells 1 are housed as assembled battery 2 in exterior case 3. The plurality of battery cells 1 are assembled in a predetermined arrangement to form battery block 10, and the plurality of battery blocks 10 are connected to form assembled battery 2. In battery pack 100 illustrated in the drawing, two battery blocks 10 are stacked and connected in the front-rear direction in the drawing in a vertically standing posture to form assembled battery 2. In assembled battery 2, two battery blocks 10 stacked in the front-rear direction can be connected via a connecting member (not illustrated).

### (Battery cell 1)

Battery cell 1 is a non-aqueous electrolyte secondary battery cell such as a lithium ion battery. However, the present invention does not limit battery cell 1 to a lithium ion battery, and all secondary batteries that are currently used and will be developed, such as other nonaqueous electrolyte secondary batteries and nickel-metal hydride batteries, can be used. Battery cell 1 in Fig. 4 is a cylindrical battery having electrode end surfaces at both ends. However, a battery in a battery pack of the present invention is not limited to a cylindrical battery. This is because a chargeable rectangular battery or the like can also be used as battery cell 1. Each of the cylindrical batteries houses electrodes and an electrolytic solution in a cylindrical metal case. The metal case adopts a sealed structure in which a sealing plate is hermetically fixed to an opening of a package can with a closed bottom. The package can is fabricated by pressing a metal plate. The sealing plate is caulked and hermetically fixed to a peripheral edge of the opening of the package can with a packing made of an insulating material interposed therebetween. Each of the rectangular batteries is provided with insulated positive and negative electrode terminals on the sealing plate that closes the opening of the metal case.

### (Battery block 10)

In battery block 10, the plurality of battery cells 1 are disposed in parallel to each other, and electrode end surfaces of battery cells 1 are disposed on the same plane. Battery block 10 includes a plurality of battery cells 1 arranged at fixed positions in plastic battery holder 12. In battery block 10 of Fig. 4, 154 cylindrical batteries are housed in battery holder 12, and one row of 11 battery cells 1 is arranged in one stage. In battery block 10, with each battery cell 1 in a parallel posture, the electrode end surfaces of battery cells 1 are disposed on the same plane, and lead plate 11 is connected to the electrode end surfaces on the same plane.

### (Lead plate 11)

In battery block 10, a plurality of lead plates 11 connect a plurality of battery cells 1 in parallel to each other. Lead plate 11 illustrated in Fig. 4 has a laminated structure of connection lead plate 11A having a connector connected to the electrode end surfaces of the plurality of battery cells 1 and energizing lead plate 11B that reduces energizing resistance between battery cells 1 connected in parallel or in series. Connection lead plate 11A is connected to the electrode end surface by a method such as laser welding, spot welding, or ultrasonic welding. Further, in battery block 10, the plurality of battery cells 1 connected in parallel to each other are connected in series via bus bar 14 disposed on the side surface of battery holder 12. In battery block 10 of Fig. 4, 22 battery cells 1 are connected in parallel and 7 battery cells 1 are connected in series, 154 battery cells 1 in total. However, in the battery block, the number and connection state of the plurality of battery cells are not limited to the above. The battery block can variously change the number of battery cells to be connected and the connection state.

### (Battery holder 12)

Battery holder 12 in Fig. 4 has a structure in which a plurality of battery cells 1 are disposed at fixed positions. In battery holder 12 of Fig. 4, plastic of an insulating material is molded, and insertion tubes 13 of the plurality of battery cells 1 are integrally molded and provided. Insertion tube 13 holds battery cell 1 set here at a fixed position. In battery holder 12 in the drawing, with battery cell 1 being a cylindrical battery, insertion tube 13 has such a shape that the cylindrical battery is inserted and held at a fixed position. In battery holder 12 in the drawing, battery cells 1 are arranged in a row of 11 in the left-right direction and in 14 stages in the up-down direction, 154 battery cells 1 in total. Battery cells 1 are arranged in zigzag manner in which battery cells 1 arranged vertically are positioned between valleys of battery cells 1 adjacent to each other in the left-right direction.

As illustrated in Fig. 4, battery holder 12 is divided into a pair of cell holders 12A, 12B and molded. Each of cell holders 12A, 12B constituting battery holder 12 is provided with insertion tube 13 into which battery cell 1 is inserted in a parallel posture. Insertion tube 13 has both ends opened to expose an electrode end surface of the cylindrical battery to be inserted therein, so that lead plate 11 can be connected to the electrode end surface. Insertion tubes 13 of cell holders 12A, 12B have a length that allows about half of battery cells 1 to be inserted, and each of battery cells 1 is arranged at a fixed position of battery holder 12 by inserting the half into one cell holder 12A and the remaining half into the other cell holder 12B. Battery holder 12 having the above structure has an advantage that the plurality of battery cells 1 can be reliably held while being arranged at fixed positions by inserting battery cells 1 into insertion tubes 13 of cell holders 12A, 12B divided into two.

Further, although not illustrated, the battery pack may include a circuit board. The circuit board can be disposed at a fixed position of the exterior case via the substrate holder. The substrate holder can be disposed, for example, between the battery block and the exterior case, and the circuit board can be disposed inside. An electronic component (not illustrated) connected to the battery cells to achieve a protection circuit for the battery cells may be mounted on the circuit board. The protection circuit may be a circuit that prevents overcharge and overdischarge of the battery cells, a circuit that prevents overcurrent, or a circuit that interrupts current in a state in which the temperature rises abnormally.

### (Second exemplary embodiment)

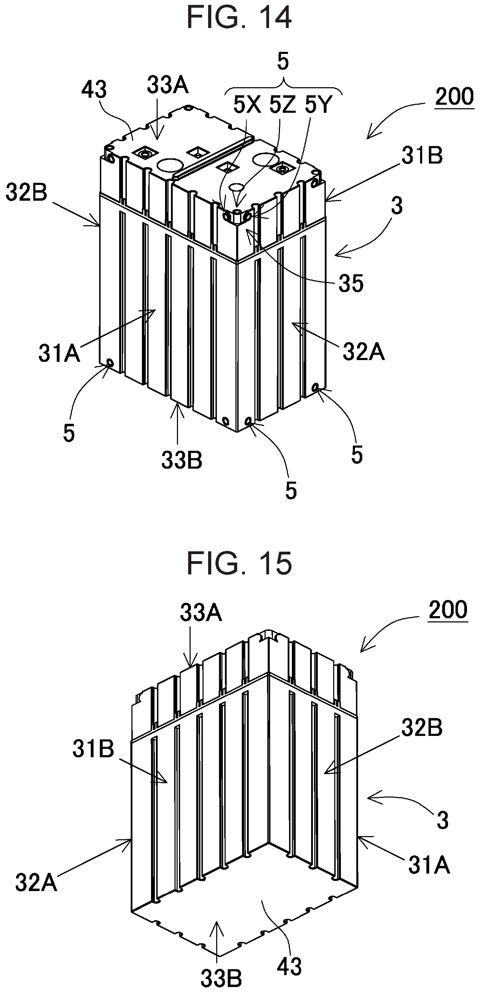

Battery pack 100 according to the first exemplary embodiment described above shows an example in which pin insertion holes 5 are provided at the four corners of all of the six surfaces of rectangular parallelepiped exterior case 3. However, exterior case 3 may have a structure in which pin insertion holes 5 are arranged only at the four corners of at least three surfaces orthogonal to each other, and exterior case 3 is lifted in three directions orthogonal to each other. In battery pack 200, for example, as illustrated in Figs. 14 and 15, pin insertion holes 5 can be provided only at four corners of first main surface 31A, first side surface 32A, and first end surface 33A, which are three surfaces adjacent to each other in an orthogonal posture. In this case, pin insertion holes 5 are not provided at the four corners of second main surface 31B, second side surface 32B, and second end surface 33B, which are the remaining surfaces of exterior case 3. However, even in an attitude in which any one of first main surface 31A, first side surface 32A, and first end surface 33A is the upper surface, the lift pins can be connected to pin insertion holes 5 provided at the four corners with the upper surface of exterior case 3 as hanging surface 30 and can be lifted.

In battery pack 200 having this structure, first pin insertion hole 5X, second pin insertion hole 5Y, and third pin insertion hole 5Z are arranged in a posture orthogonal to each other at a corner formed by first main surface 31A, first side surface 32A, and first end surface 33A in which pin insertion holes 5 are provided at four corners. Therefore, in battery pack 200, this corner can be used as composite corner portion 35, and the structure can be the same as that of the first exemplary embodiment described above. As described above, exterior case 3 having a structure in which pin insertion holes 5 are provided only at the four corners of three surfaces orthogonal to each other can be lifted in three directions by using at least one corner as the above-described composite corner portion 35.

As described above, in the exterior case having a structure in which the pin insertion holes are not provided in all the four corners of the six surfaces, all the corners are not necessarily required to be the above-described composite corner portions, and may be corners including any one or two of the first pin insertion hole, the second pin insertion hole, and the third pin insertion hole. In the corner of this structure, since the restriction imposed between the resin blocks adjacent to each other is reduced, 1 to 2 resin blocks can be molded with a simple structure as compared with the structure in which all of the first resin block, the second resin block, and the third resin block are provided as described above.

However, even in a corner provided with only 1 to 2 pin insertion holes, the first resin block, the second resin block, and the third resin block having the same structure as the above-described composite corner portion can be provided. In this case, since not all the pre-formed holes are used as the pin insertion holes to which the lift pins are to be connected, the pre-formed holes that are not used as the pin insertion holes may be the empty holes without the insert collars being fixed thereto, to thereby reduce the component cost. However, since there is a possibility that a problem of erroneously inserting the lift pin into the pre-formed hole in which the insert collar is not fixed occurs, it is also possible to prevent erroneous use by attaching a closing member such as a closing cap to a hole not used for the pin insertion hole. This structure can be an exterior case in which a composite corner portion is provided at a position optimum for a requirement required for each product while reducing manufacturing cost by fixing an insert collar only to a pre-formed hole used as a pin insertion hole and closing a pre-formed hole not used as a pin insertion hole while providing pre-formed holes in mutually orthogonal postures in each corner using a mold having the same structure.

### (Third exemplary embodiment)

Further, the battery pack may have 4 to 5 surfaces provided with pin insertion holes at the four corners. In the battery pack, a surface on which the pin insertion hole is not provided can be determined in consideration of the position of the hanging surface according to the application. For example, although not illustrated, the battery pack may have a structure in which the pin insertion holes are not provided in the second end surface serving as the bottom surface, and the pin insertion holes may be provided at four corners of the first end surface serving as the upper surface, as well as a pair of main surfaces and a pair of side surfaces serving as four peripheral surfaces. This battery pack can have a structure similar to that of the first exemplary embodiment described above, with four corners positioned at four corners of the first end surface serving as the upper surface as composite corner portions. The battery pack can be lifted by connecting lift pins to pin insertion holes provided at four corners with five surfaces excluding a second end surface as a bottom surface as a hanging surface.

### INDUSTRIAL APPLICABILITY

The present invention can be effectively applied to a battery pack used as a power source for an electric vehicle or a power source for an electric heavy machine, a forklift, or the like, and particularly to a battery pack in which a large number of battery cells are housed in an exterior case.

### REFERENCE MARKS IN THE DRAWINGS

- 100, 200: battery pack
- 1: battery cell
- 2: assembled battery
- 3: exterior case
- 3A: body case
- 3B: lid case
- 5: pin insertion hole
- 5X: first pin insertion hole
- 5Y: second pin insertion hole
- 5Z: third pin insertion hole
- 6: resin block
- 6X: first resin block
- 6Y: second resin block
- 6Z: third resin block
- 7: lift pin
- 7A: pin body
- 7B: locking part
- 7b: ball
- 8: external output terminal
- 10: battery block
- 11: lead plate
- 11A: connection lead plate
- 11B: energizing lead plate
- 12: battery holder
- 12A, 12B: cell holder
- 13: insertion tube
- 14: bus bar
- 18: set screw
- 19: packing
- 19A: detour portion
- 30: hanging surface
- 31: main surface
- 31A: first main surface
- 31B: second main surface
- 32: side surface
- 32A: first side surface
- 32B: second side surface
- 33: end surface
- 33A: first end surface
- 33B: second end surface
- 34: housing
- 35: composite corner portion
- 36: stepped surface
- 37: stepped recess
- 38: exposed portion
- 40, 40A, 40B: peripheral wall
- 41: main surface plate
- 42: side surface plate
- 43: end surface plate
- 44: groove
- 45: flange
- 46: flange
- 46a: insertion hole
- 47: vertical groove
- 50: pre-formed hole
- 51: insert collar
- 51A: tube
- 51a: irregularities
- 51B: flange
- 52: fitting recess
- 61: outer periphery
- 62: bottom
- 90: battery pack
- 93: exterior case
- 94: coupling recess
- 95: corner block
- 96: fixing screw
- 97: pin connecting surface
- 98: pin insertion hole

## Claims

1. A battery pack comprising:
an assembled battery including a plurality of battery cells; and
an exterior case made of a resin housing the assembled battery,
wherein
the exterior case has a box shape with a rectangular parallelepiped outer profile, and includes
a pair of main surfaces disposed to face each other,
a pair of side surfaces disposed to face each other and connecting side edges of the pair of main surfaces, and
a pair of end surfaces disposed to face each other and connecting end edges of the pair of main surfaces and the pair of side surfaces,
the exterior case includes a plurality of pin insertion holes to which lift pins for lifting the battery pack are connectable, each of the plurality of pin insertion holes being positioned at a respective one of four corners of each of the main surfaces, four corners of each of the side surfaces, and four corners of each of the end surfaces and being formed as a non-through hole in a corresponding one of a plurality of resin blocks integrally molded with the exterior case,
the plurality of pin insertion holes include
a first pin insertion hole provided at each of four corners of each of the main surfaces,
a second pin insertion hole provided at each of four corners of each of the side surfaces, and
a third pin insertion hole provided at each of four corners of each of the end surfaces,
in each of the plurality of pin insertion holes, an insert collar for locking the lift pin is inserted into and fixed in an opening of the pin insertion hole,
the plurality of resin blocks include
a first resin block in which the first pin insertion hole is formed,
a second resin block in which the second pin insertion hole is formed, and
a third resin block in which the third pin insertion hole is formed,
a corner portion formed by a corresponding main surface of the main surfaces, a corresponding side surface of the side surfaces, and a corresponding end surface of the end surfaces, each of which has the plurality of pin insertion holes at four corners, is defined as a composite corner portion having the first pin insertion hole, the second pin insertion hole, and the third pin insertion hole, and
in the composite corner portion,
the third resin block is molded at a corner of the corresponding end surface, and the third pin insertion hole is open on the corresponding end surface,
the first resin block is integrally connected adjacent to the third resin block, and the first pin insertion hole is open on the corresponding main surface,
the second resin block is integrally connected adjacent to the third resin block, and the second pin insertion hole is open on the corresponding side surface, and
a stepped surface, lower than the corresponding main surface and the corresponding side surface, is formed along an outer peripheral surface of the third resin block at a boundary portion among the corresponding main surface, the corresponding side surface, and the corresponding end surface, to form a stepped recess at the composite corner portion.

2. The battery pack according to Claim 1, wherein
the exterior case includes the plurality of pin insertion holes at each of the four corners of each of six surfaces constituting the rectangular parallelepiped, and each corner portion of the exterior case is the composite corner portion.

3. The battery pack according to Claim 1 or 2, wherein
each of the plurality of pin insertion holes includes a pre-formed hole provided in a corresponding one of the plurality of resin blocks, the insert collar being fixed in the opening of the pre-formed hole,
the insert collar has a cylindrical shape with an inner diameter that allows passage of the lift pin in a non-locked state but does not allow passage of the lift pin in a locked state, and
the pre-formed hole has a cylindrical shape with an inner diameter and a depth that allow the lift pin in the locked state to be taken into and out of the pre-formed hole.

4. The battery pack according to Claim 3, wherein
the insert collar includes a cylindrical tube having an outer peripheral surface with irregularities, and the cylindrical tube is press-fitted and fixed to the pre-formed hole.

5. The battery pack according to Claim 1 or 2, wherein
the first resin block is integrally molded with a main surface plate defining the corresponding main surface, an end surface plate defining the corresponding end surface, and the third resin block, and
the second resin block is integrally molded with a side surface plate defining the corresponding side surface, the end surface plate defining the corresponding end surface, and the third resin block.

6. The battery pack according to Claim 5, wherein
each of the first resin block and the second resin block includes a tip portion around the opening, the tip portion protruding from the stepped surface as an arc-shaped exposed portion.
